# EUROPÄISCHE PATENTSCHRIFT

(11) **EP 0 692 395 B1**
(45) Veröffentlichungstag und Bekanntmachung des Hinweises auf die Patenterteilung: **07.11.2001**
(21) Anmeldenummer: 95110543.6
(22) Anmeldetag: 06.07.1995
(51) Int. Cl.: B60C 9/20, B60C 15/06

(54) **Bandage und Verfahren zur Bandage von festigkeitsgebenden Schichten eines Reifens**
Overlay structure and method for overlaying reinforcing plies of a tyre
Bandage et procédé permettant le bandage de couches de renfort d'un pneumatique

(30) Priorität: 09.07.1994 DE 4424279
(43) Veröffentlichungstag der Anmeldung: 17.01.1996
(73) Patentinhaber: Uniroyal Englebert Reifen GmbH, D-52068 Aachen (DE)
(72) Erfinder: Russell, Richard Michael, Dr., B-4731 Eynatten (BE); Lorenz, Horst, D-52223 Stollberg (DE); Huerre, Hervé, Dr., F-60750 Choisy-au Bac (FR); Glaziow, Jean Pierre, F-60200 Compiegne (FR)
(74) Vertreter: Schneider, Egon

(56) Entgegenhaltungen:
- US-A- 2 904 095
- US-A- 3 028 903
- US-A- 3 040 797
- US-A- 4 739 814
- US-A- 5 365 988

## Beschreibung

Die Erfindung betrifft eine Bandage aus Textilgewebe zur Erzielung des Zusammenhalts von festigkeitsgebenden Schichten eines Reifens sowie ein Verfahren zur Bandage von festigkeitsgebenden Schichten eines Reifens. Es ist bekannt, festigkeitsgebende Schichten eines Reifens durch eine äußere Bandage gegen mögliche Ablöseerscheinungen zu sichern. Beispielsweise ist es bekannt, einen um eine Karkasse gelegten Gürtel eines Reifens zusätzlich durch eine Gürtelbandage den Fliehkräften während des Betriebes entgegenwirkend in seiner Form zu sichern. Ebenso wie bei Kernummantelungen dienen die Bandagen dabei außerdem als Fertigungshilfe beim Aufbau des Reifens. Sowohl bei der Kernummantelung, bei der derartige Bandagen um den Kern gewickelt werden, als auch bei der Gürtelbandage, bei der um den äußeren Gürtel eine Bandage aufgelegt oder gewickelt wird, soll durch die Bandage ein Ablösen der unter der Bandage befindlichen festigkeitsgebenden Schichten im Gürtel oder im Kernaufbaumaterial verhindert werden.

Die bekannten Bandagen werden dabei üblicherweise entweder lose auf das festigkeitsgebende Material aufgelegt oder gewickelt. Dabei besteht die erhöhte Gefahr, daß die Bandage sich ihrerseits selbständig löst. Andererseits ist es beispielsweise aus der DE-OS 42 14 197 und DE-OS 42 14 198 für Gürtelbandagen bekannt, zur Verhinderung des Ablösens, Materialstreifen mit gummiertem Cordgewebe einzusetzen. Dies erfordert jedoch einen hohen Aufwand sowohl an zusätzlichem Gummimaterial als auch für die Herstellung, da die Streifen zumindest in zusätzlichen Herstellungsschritten gummiert und kalandriert werden. Somit werden die Kosten sowohl für die Herstellung als auch für das Material eines Reifens unerwünscht hoch. Außerdem ist das zusätzliche Material im äußeren Reifenbereich einem ruhigen, schwingungsfreien Reifenlauf abträglich.

Aus der DE-PS 28 51 002 ist eine Bandage aus Textilmaterial mit einem E-Modul, der wesentlich kleiner als der E-Modul der inneren Gürtellage ist, bekannt, die auf den Gürtel aufgelegt und überlappt wird. Auch eine solche Bandage gibt nur bedingt sicheren Halt auf dem Gürtel, so daß sich diese immer noch unbeabsichtigt lösen kann.

Aus der US 4,739,814 ist ein quadratisches Gewebe aus Polyester oder Nylon mit 12-130 Kettfaden pro decimeter und mit 15 - 70 Schießfäden pro decimeter bekannt, welches mit eines Klebrig machen den Lösung aus Latex oder unvulkanisiertem Kantschuk als Bandage auf den Reifengürtel aufgelegt wird.

Der Erfindung liegt die Aufgabe zugrunde, eine Bandage zu schaffen, die eine gute Haftung auf den festigkeitsgebenden Schichten mit geringem Aufwand ermöglicht.

Erfindungsgemäß wird die Aufgabe durch eine Ausbildung der Bandage gemäß den Merkmalen von Anspruch 1 sowie durch ein Verfahren von Anspruch 5 gelöst.

Die selbstklebende Seite der Bandage ermöglicht mit Auflegen bzw. Aufwickeln der Bandage auf die obere Schicht der festigkeitsgebenden Schichten einen sofortigen Halt der Bandage auf der festigkeitsgebenden Schicht. Ein selbständiges, unbeabsichtigtes Lösen der Bandage beim Herstellungsprozeß wird somit weitgehend verhindert. Die aufwendigen Behandlungen des Kalandrierens und Gummierens des Bandagematerials entfallen. Der vergleichsweise hohe Materialaufwand zur Herstellung der Gummischicht beim Gummieren entfällt.

Besonders vorteilhaft ist eine solche materialarme Bandage, wenn sie um die äußerste Gürtellage gelegt bzw. gewickelt ist und somit den Gürtel verfestigt, da speziell in diesem Bereich Materialreduzierung besonders angestrebt wird.

Eine weitere besonders vorteilhafte Bandage stellt eine Bandage dar, die um einen Reifenkern gewickelt ist. In beiden Ausbildungen wird der Aufbau des bandagierten Gürtels bzw. des Reifenkerns wesentlich vereinfacht.

Vewendet Nach des Erfindung wird dabei ein Nylongewebe aus Einfachgarn mit Titer dtex zwischen 800 und 2000, beispielsweise des Typs 940/1 oder 1400/1, mit Baumwoll- oder Rayon-schuß. Ein solches Gewebe ist besonders leicht, besitzt einen hohen Elastizitätsmodul und ist einfach herzustellen.

Besonders einfach herzustellen ist eine solche Bandage, die mit einer klebrig machenden Lösung vorbehandelt ist. Eine bevorzugte klebrig machende Lösung stellt eine RFL-Diplösung (RFL: Resorcin-Formaldehyd-Latex) dar.

Durch die Diplösung wird ermöglicht, daß das Gewebe bei der Vulkanisation an das Gummimaterial angebunden und gleichzeitig die Bandage zur Erzielung eines sicheren Halts hinreichend klebrig gemacht wird.

Bevorzugt, da besonders einfach in Herstellung und besonders sicher in Funktion ist eine Ausbildung gemäß den Merkmalen von Anspruch 4.

Besonders vorteilhaft ist das Verfahren gemäß Anspruch 5 Durch Beschichten des Bandagenmaterials mit einer Kleberschicht vor Auflegen auf die zu bandagierenden Schichten wird der Aufklebevorgang besonders vereinfacht. Während beispielsweise der Reifen auf seiner Trommel aufgebaut wird, kann das Bandagenmaterial unabhängig davon mit einfachen Mitteln mit einer Klebeschicht beschichtet werden. Durch einfaches Auflegen des Bandagenmaterials auf die so weit vorgefertigten festigkeitsgebenden Schichten wird schnell eine feste, zuverlässige Bandage ermöglicht. Besonders vorteilhaft, weil fertigungstechnisch sehr einfach herzustellen, ist die Integration der Vorbehandlung mit Klebemitteln in den Herstellungsprozeß des Bandagenmaterials. So ist es besonders vorteilhaft, das Bandagenmaterial mit klebrig machender Lösung zu behandeln, während das Bandagematerial nach erfolgtem Heißstreckprozeß gedipt wird. Da das Gewebe meist ohnehin heißgestreckt und zwecks Erzielung einer Anbindung des Gewebes an das Gummimaterial beim Vulkanisationsprozeß vorab gedipt wird, ist kein zusätzlicher Arbeitssschritt für die spezielle Behandlung erforderlich.

Die Erfindung wird im folgenden anhand der in den Figuren 1 bis 4 dargestellten Ausführungsformen näher erläutert.

Hierin zeigen,
- Fig. 1:: Reifen mit Aufbau der Schichten
- Fig. 2:: Gewebe
- Fig. 3:: Schema der mit Bandage versehenen äußeren Gürtellage

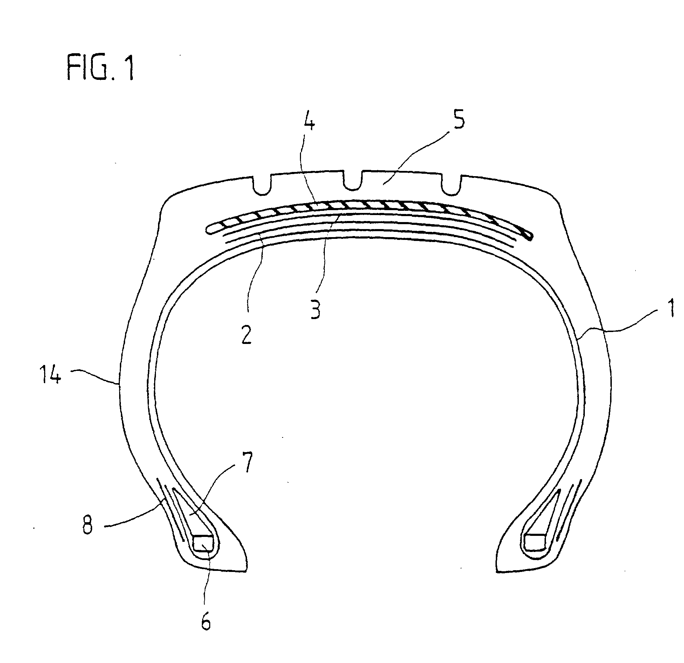

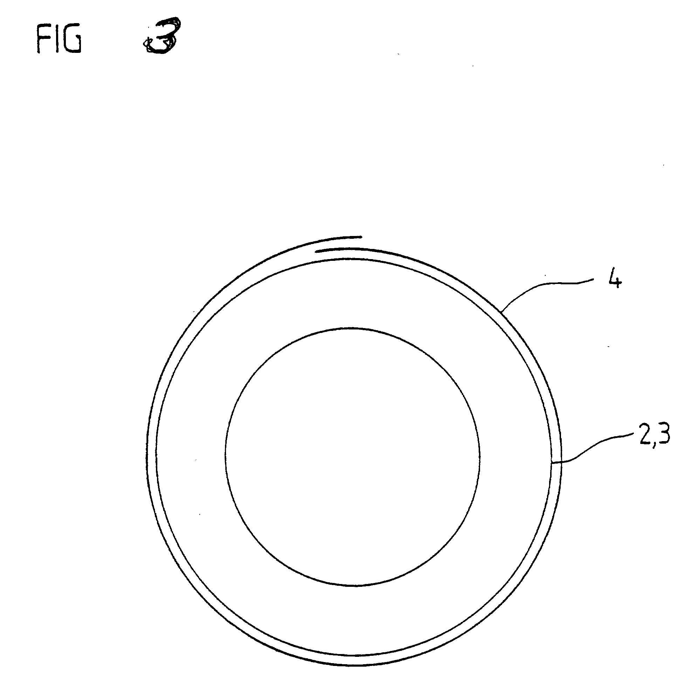

Figur 1 zeigt den Querschnitt eines Fahrzeugluftreifens bekannter Bauart, bei dem eine Karkasse 1 radialer Bauart aus einer oder mehreren Schichten von dem in Figur 1 auf der linken Seite dargestellten Wulst, bestehend aus Kern 6 und Apex 7, über die linke Seitenwand 14 bis hin zur rechten Seitenwand 14 und den rechten Wulst, bestehend aus Kern 6 und Apex 7, reicht. Die Karkasse 1 ist jeweils um den Kern 6 von innen nach außen herumgelegt. Über die Enden der Karkasse, den Auslauf des Apex und den unteren Seitenwandbereich ist in bekannter Weise in Umfangsrichtung des Reifens ein Verstärkungsstreifen 8 aufgelegt. Oberhalb der Karkasse 1 sind in herkömmlicher Weise zwei über den Umfang des Reifens reichende übereinander angeordnete Stahlgürtellagen 2, 3 aufgelegt, die durch eine Gürtelbandage 4, die radial außerhalb der äußeren Stahlgürtellage aufgelegt ist, und die in axialer Richtung des Reifens über die äußere Gürtellage hinwegreicht in radialer Richtung gefestigt sind. Die Gürtelbandage 4 ist in bekannter Weise als Wickelbandage ausgeführt. Es ist aber auch denkbar, die Gürtelbandage, wie in Figur 3 dargestellt ist, in ebenfalls bekannter Weise durch parallele in Reifenachsrichtung nebeneinander angeordnete Umfangsbandagestreifen auszubilden. Radial oberhalb der Gürtelbandage 4 ist in bekannter Weiseder Laufstreifen 5 aufgelegt.

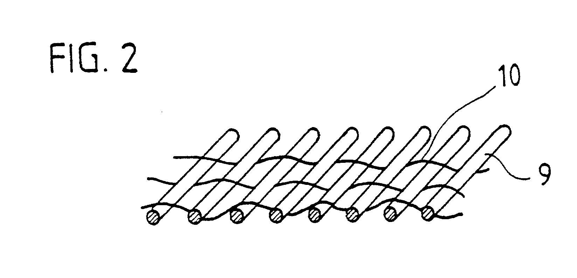

Die Gürtelbandage 4 ist, wie in Figur 2 dargestellt ist, aus einem Gewebe mit Kettfäden aus Nylongarn 9 und mit dünnen, dem Nylongarn Halt gebenden Schußfäden 10 aus Baumwolle oder Rayongarn aufgebaut. Das Gewebe wird zur Erhöhung des Elastizitätsmoduls nach seiner Herstellung in bekannter Weise heißgestreckt und anschließend gedipt. Das Dippen erfolgt in einer RFL-Diplösung (RFL: Resorcin-Formaldehyd-Latex) mit einem Naturlatex. Hierdurch wird das Gewebe zum einen an das Gummimaterial bei der Vulkanisation anbindbar und zum anderen klebrig gemacht.

Beim Aufbau des Reifens wird ein so klebrig gemachter Bandagestreifen 4 einfach in bekannter Weise, wie in Figur 3 dargestellt ist, auf die äußere Gürtellage aufgelegt. Der Bandagestreifen bleibt so auch bei Belastung während des weiteren Aufbauprozesses sicher auf den zu bandagierenden festigkeitsgebenden Schichten haften und sichern den Zusammenhalt. Nach Fertigstellung des Aufbaus des Reifens wird dieser in bekannter Weise vulkanisiert, wobei die vorbehandelten Gewebelagen der Bandage 4, in herkömmlicher Weise an das umgebende Kautschukmaterial angebunden werden.

Es ist auch denkbar, anstelle eines Nylongewebes Polyester, Dreher oder Raschelwirkware einzusetzen.

Das Nylongewebe ist aus Einfachgarn mit einem Titer dtex zwischen 800 und 2000 aufgebaut.

### Bezugszeichenliste

- 1: Karkasse
- 2: Stahlgürtellage
- 3: Stahlgürtellage
- 4: Gürtelbandage
- 5: Lauffläche
- 6: Kern
- 7: Apex
- 8: Verstärkungsstreifen
- 9: Kettfaden
- 10: Schußfaden
- 14: Seitenwand

## Patentansprüche

1. Bandage eines Fahrzeugreifens, die aus Textilgewebe in Form eines umlanfenden Cordgeweb zur Erzielung des Zusammenhalts des Gürtels eines Fahrzeugreifens ausgebildet ist, wobei das Textilgewebe aus einem Nylongewebe bzw. Polyestergewebe aus Einfachgarn (9) mit Titer dtex zwischen 800 und 2000 mit Baumwoll- und Rayon-Schuss (10) aufgebaut ist, wobei das Textilgewebe (4) ungummiert und zumindest auf der Seite, die den bandagierenden, festigkeitsgebenden Schichten (2,3) des Gürtels im Fahrzeugreifen zugewandt ist, zumindest in Teilbereichen selbstklebend auf der äußeren festigkeitsgebenden Schicht ausgebildet ist.

2. Bandage nach Anspruch 1, **dadurch gekennzeichnet, dass** die Bandage mit einer klebrig machenden Lösung vorbehandelt ist.

3. Bandage nach Anspruch 2, **dadurch gekennzeichnet, dass** die klebrig machende Lösung eine RFL-Dip-Lösung ist.

4. Bandage nach einem der Ansprüche 1 bis 3, **dadurch gekennzeichnet, dass** die Bandage in ihren gesamten zu den zu bandagierenden, festigkeitsgebenden Schichten weisenden Bereichen selbstklebend ausgebildet ist.

5. Verfahren zur Bandage des Gürtels eines Reifens, bei dem eine Bandage nach einem der Ansprüche 1 bis 4 ungummiert auf die festigkeitsgebende Schicht des Gürtels des Reifens aufgeklebt wird.

6. Verfahren nach Anspruch 5, **dadurch gekennzeichnet, dass** das Bandagematerial vor Auflegen auf den zu bandagierenden Gürtel des Reifens mit einer klebrig machenden Lösung behandelt wird.

7. Verfahren nach Anspruch 6, **dadurch gekennzeichnet, dass** die Bandage zunächst heiß gestreckt und im Anschluss daran mit einer klebrig machenden Dip-Lösung vorbehandelt wird.

## Claims

1. Bandage for a vehicle tyre, which is made of textile fabric, in the form of a circumferential cord fabric, to hold the belt of a vehicle tyre in place, wherein the textile fabric is constructed from a nylon fabric or polyester fabric formed from a single yarn (9) having a titre dtex between 800 and 2000 with a cotton and rayon weft (10), wherein the textile fabric (4) is not rubber-coated and, at least on the side which faces the bandaging reinforcing layers (2, 3) of the belt in the vehicle tyre, it is self-adhesive at least in partial regions on the external reinforcing layer.

2. Bandage according to claim 1, **characterised in that** the bandage is pretreated with an adhesive-rendering solution.

3. Bandage according to claim 2, **characterised in that** the adhesive-rendering solution is an RFL dip solution.

4. Bandage according to one of claims 1 to 3, **characterised in that** the bandage is self-adhesive in its entire regions which point towards the bandaging reinforcing layers.

5. Method of bandaging the belt of a tyre, wherein a bandage according to one of claims 1 to 4 is adhered, in a non-rubber-coated manner, to the reinforcing layer of the belt of the tyre.

6. Method according to claim 5, **characterised in that** the bandage material is treated with an adhesive-rendering solution prior to being applied to the belt of the tyre to be bandaged.

7. Method according to claim 6, **characterised in that** the bandage is initially stretched in the hot state and subsequently pretreated with an adhesive-rendering dip solution.

## Revendications

1. Bandage d'un pneumatique de véhicule, qui est constitué à base de tissu textile sous la forme d'un tissu périphérique à corde pour obtenir le maintien de la ceinture d'un pneumatique automobile, le tissu textile étant structuré à partir d'un textile nylon ou d'un textile polyester à base de fil simple (9) avec titre dtex entre 800 et 2000 avec trame de coton et de rayonne (10), le tissu textile (4) étant non caoutchouté et étant réalisé au moins dans des zones partielles, au moins sur le côté qui est tourné vers les couches (2, 3) de la ceinture dans le pneumatique automobile qui forment le bandage et donnent la résistance, de façon autocollante sur la couche extérieure donnant la résistance.

2. Bandage selon la revendication 1, **caractérisé en ce que** le bandage est prétraité avec une solution qui donne l'adhésivité.

3. Bandage selon la revendication 2, **caractérisé en ce que** la solution donnant l'adhésivité est une solution d'imprégnation RFL.

4. Bandage selon l'une quelconque des revendications 1 à 3, **caractérisé en ce que** le bandage est conçu de façon autocollante dans l'ensemble de ses zones dirigée vers les couches formant le bandage et donnant la résistance.

5. Procédé pour le bandage de la ceinture d'un' pneumatique, selon lequel un bandage qui n'est pas caoutchouté, selon l'une quelconque des revendications 1 à 4, est collé sur la couche donnant la résistance de la ceinture du pneumatique.

6. Procédé selon la revendication 5, **caractérisé que ce** que le matériau de bandage est traité avec une solution donnant l'adhésivité avant l'application sur la ceinture du pneumatique à munir d'un bandage.

7. Procédé selon la revendication 6, **caractérisé que ce** que le bandage est d'abord étiré à chaud et ensuite est prétraité avec une solution donnant l'adhésivité.
